**Europäisches Patentamt**

**European Patent Office**

**Office européen des brevets**

(11) Veröffentlichungsnummer : **0 365 900 B1**

(12)

# EUROPÄISCHE PATENTSCHRIFT

(45) Veröffentlichungstag der Patentschrift :
**03.06.92 Patentblatt 92/23**

(51) Int. Cl.$^5$ : **E03F 3/06, F16L 55/165, F16L 55/18**

(21) Anmeldenummer : **89118686.8**

(22) Anmeldetag : **07.10.89**

(54) **Verfahren zum Einbringen eines Inliners in eine Kanalrohrleitung und Vorrichtungen zur Durchführung des Verfahrens.**

(30) Priorität : **15.10.88 DE 3835186**

(43) Veröffentlichungstag der Anmeldung :
**02.05.90 Patentblatt 90/18**

(45) Bekanntmachung des Hinweises auf die
Patenterteilung :
**03.06.92 Patentblatt 92/23**

(84) Benannte Vertragsstaaten :
**AT BE CH DE FR GB IT LI LU NL SE**

(56) Entgegenhaltungen :
**DE-A- 3 413 294**
**FR-A- 2 009 851**

(56) Entgegenhaltungen :
**FR-A- 2 263 443**
**GB-A- 2 079 805**
**US-A- 2 525 680**
**US-A- 4 197 908**

(73) Patentinhaber : **HERMANN HEMSCHEIDT MASCHINENFABRIK GMBH & CO.**
**Bornberg 97-103 Postfach 100269**
**W-5600 Wuppertal 1 (DE)**

(72) Erfinder : **Behnert, Holger**
**Schwartnerstrasse 1c**
**W-5600 Wuppertal 2 (DE)**
Erfinder : **Peschel, Walter, Ing. (grad.)**
**Kruppstrasse 222**
**W-5600 Wuppertal 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zum Einbringen eines Inliners in eine Kanalrohrleitung sowie Vorrichtungen zur Durchführung des Verfahrens, nach den Oberbegrifft der Ansprüche 1 bzw. 2.

Aus der DE-A-3 413 294 ist eine derartige Vorrichtung zum Zusammensetzen von Leitungsrohren zu einem Inliner bekannt, die einen Richtwagen zum Transport und Ausrichten der einzelnen Rohrstücke aufweist, wobei der Richtwagen mit einem Seilzug innerhalb der Kanalrohrleitung bis zu dem bereits eingebrachten Rohrstrang verfahren wird. Das einzubringende Rohrstück ist auf einer um die Rohrachse und quer dazu verstellbaren Rohraufnahme aufgespannt. Damit wird es konzentrisch ausgerichtet und in den bereits eingebrachten Rohrstrang eingeschoben. Hierbei müssen die Rohrachsen der zusammenzufügenden Rohrenden jedoch genau übereinstimmen. Dies ist ein aufwendiger Vorgang, der große Sorgfalt erfordert. Diese Vorrichtung hat jedoch den Nachteil, daß die Lage des Transportwagens beim genauen Positionieren der Rohre instabil ist. Geringe Abweichungen der Rohraufnahme aus der Rohrachse führen bereits dazu, daß die Rohrkanten gegeneinander stoßen.

Aus der US-A-4 197 908 ist es allgemein bekannt, daß in Rohrleitungen verfahrbare, Geräte tragende Transportwagen fixiert werden müssen, um beispielsweise eine möglichst exakte Bearbeitung der Rohrwand von auf dem Transportwagen aufgestellten Geräten zu gewährleisten, wobei Spannzylinder zum Feststellen des Transportwagens verwendet werden.

Der vorliegenden Erfindung liegt die Aufgabe zugrunde, das Ausrichten der Leitungsrohre in die vorgegebene Einbaulage beim Zusammensetzen des Inliners zu verbessern.

Diese Aufgabe wird mit den im kennzeichnenden Teil des Anspruches 1 angegebenen Merkmalen gelöst.Der Anspruch 2 betrifft eine Vorrichtung zum Zusammensetzen der Leitungsrohre zu einem Inliner. Die Unteransprüche 3 bis 6 beziehen sich auf zweckmäßige Ausgestaltungen der Vorrichtung nach Anspruch 2.

Die Kanalrohre werden einzeln auf einem Transportschlitten mit dem Seilzug zur Einbaustelle in der Kanalrohrleitung gezogen. Vor dem Zusammenstecken auf den bereits zusammengesetzten Rohrstrang gleitet das Muffenende des einzubringenden Leitungsrohres über die konisch ausgebildeten Führungszapfen eines Auslegers, der auf einem Richtwagen gelagert ist und in die offene Kanalrohrleitung hineinragt. Der Richtwagen wird mit einem Seilzug in den bereits verlegten Rohrstrang verfahren und in dem jeweils zuletzt eingebrachten Leitungsrohr verspannt, so daß der Ausleger genau zentrisch zur Rohrachse ausgerichtet ist. Auf diese Weise werden die Leitungs- oder Anschlußrohre vor dem Zusammenstecken auf einfache Weise genau in die für das Zusammenstecken erforderliche Einbaulage zentriert. Zur Anpassung an ggf. anzuschließende seitliche Zulaufleitungen kann das einzubringende Rohr noch auf dem Transportschlitten in die erforderliche Einbaulage gedreht werden. Der Einauvorgang kann von einer auf dem Transportschlitten mitgeführten Fernsehkamera überwacht werden. Der Richtwagen und ebenso der Transportschlitten sind aus wenigen, einfach ausgebildeten Bauteilen zusammengesetzt.

Die Erfindung gewährleistet das einfache und treffsichere Zentrieren der Rohre unmittelbar an der Einbaustelle und somit einen zügigen, störungsfreien Arbeitsablauf beim Zusammenbau der Leitungsrohre zu einem Rohrstrang. Insbesondere wird das Einbringen von Leitungsrohren mit Anschlüssen für seitlich in die Kanalrohrleitung einmündende Zulaufleitungen erleichtert. Die Anschlußöffnungen der Leitungsrohre sind an die einmündenden Zulaufleitungen genau anzupassen. Es werden Leitungsrohre mit fabrikmäßig vorgefertigten Anschlußöffnungen verwendet. Diese werden in Übereinstimmung mit dem zuvor bei der Kanalaufnahme ermittelten Meßprotokoll ggf. mit dazwischen eingeschobenen Paßrohren, eingebracht. Das Leitungsrohr wird nach dem Aufgleiten auf die Führungszapfen durch radiale Spannzylinder an der Stellscheibe des Auslegers festgehalten und mit dem Drehantrieb des Richtwagens um die in der Rohrachse liegende Drehachse in die vorgegebene Anschlußposition gedreht. Die Rohre werden mit dem Transportschlitten an den Rohrstrang angeschlossen.

Zum Einbringen der Leitungsrohre mit seitlichem Anschluß werden Transportschlitten mit einer um die Rohrachse drehbaren und mit Spannzylindern feststellbaren Rohrhalterung eingesetzt. Zusätzlich ist noch eine Anschlußvorrichtung zum Verbinden der Anschlußöffnungen der Leitungsrohre mit den seitlichen Zulaufleitungen an der Rückwand des Transportschlittens drehbar gelagert. Die Herstellung des Inliners in einer nicht begehbaren Kanalrohrleitung wird von der Tagesoberfläche aus gesteuert.

Ausführungsbeispiele der Erfindung werden nachfolgend anhand der Zeichnung erläutert. Es zeigen:

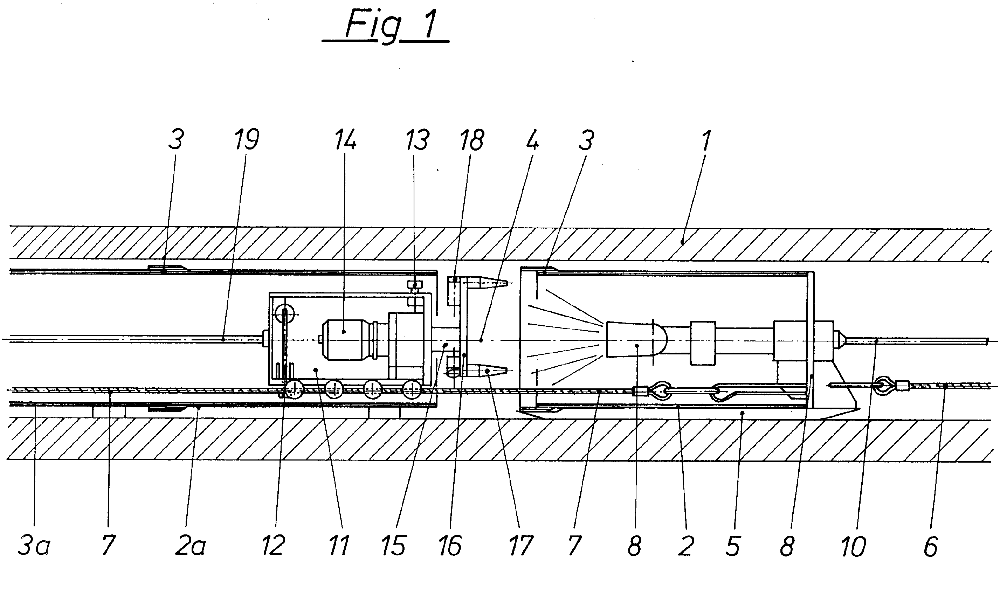

Fig. 1 einen in eine Kanalrohrleitung eingebrachten Richtwagen und einen Transportschlitten für Leitungsrohre ohne seitliche Anschlußöffnungen, im Längsschnitt;

Fig. 2 eine Darstellung entsprechend Fig. 1 mit einem Transportschlitten für Leitungsrohre mit Anschlußöffnungen in der Rohrwandung.

Mit 1 ist eine schadhafte, nicht begehbare Kanalrohrleitung für Abwasser bezeichnet, die unter der Tagesoberfläche zwischen zwei nicht dargestellten Kanalschächten verlegt ist. In die Kanalrohrleitung 1 soll ein Inliner eingezogen werden, der aus kurzen Leitungsrohren 2a, 3a, 2 bzw. 2a, 3a, 20 zusammengesetzt ist. Die Länge der Leitungsrohre 2a, 3a, 2 bzw. 2a, 3a, 20 ist so bemessen, daß sie einzeln nacheinander durch den Schacht in die Kanalrohrleitung 1 eingebracht werden können. Die Leitungsrohre 2 werden mit jeweils einem Muffenende 3 auf den Außenmantel des zuletzt eingebrachten Leitungsrohres 2a aufgesteckt und zu einem geschlossenen Rohrstrang mit der Rohrachse 4 verbunden, der dann den Inliner in der Kanalrohrleitung 1 bildet.

Das Einbringen der Leitungsrohre 2 zur Einbaustelle an dem bereits zusammengesetzten Rohrstrang des Inliners erfolgt mit einem auf der Kanalsohle verfahrbaren Transportschlitten 5, auf den die Leitungsrohre 2 mit dem Muffenende 3 in Einbaurichtung aufgelegt werden. An dem Transportschlitten 5 ist ein Seilzug befestigt mit zwei beidseitig durch den Kanal 1 hindurchgeführten Zugseilen 6 und 7, die über nicht dargestellte Umlenkrollen aus den Kanalschächten herausgeführt und von ebenfalls nicht dargestellten Seilwinden gezogen werden. Beim Einziehen ist das Leitungsrohr 2 an einer vertikalen Rückwand 8 des Transportschlittens 5 abgestützt, an der auch eine schwenkbare Fernsehkamera 9 befestigt ist. Mit dem Transportschlitten 5 werden Versorgungsleitungen 10 mitgeführt.

In dem bereits zusammengesetzten Rohrstrang des Inliners befindet sich ein an die Abmessungen des Querschnitts der Leitungsrohre 2 anpaßbarer Richtwagen 11, unter dem das an dem Transportschlitten 5 angeschlagene Zugseil hindurchgeführt ist. Mit einer hydraulisch betätigbaren Seilklemme 12 wird das Zugseil 7 an den Richtwagen 11 festgeklemmt, um diesen-ggf. auch ohne Transportschlitten 5 - im Rohrstrang des Inliners fortzubewegen.

Der Richtwagen 11 wird mit radial gerichteten, hydraulischen Spannzylindern 13 in der jeweiligen Einbauposition festgehalten. Zur Aufnahme der mit dem Transportschlitten 5 herangeführten Leitungsrohre 2 ist ein Ausleger 15 bis 18 vorgesehen, dessen in die offene Kanalrohrleitung 1 auskragende und mit einem Drehantrieb 14 verbundene Drehachse 15 achsgleich mit der Rohrachse 4 des Inliners auf dem Richtwagen 11 gelagert ist. Am auskragenden Ende ist an der Drehachse 15 eine Stellscheibe 16 angebracht, an deren Außenrand konisch ausgebildete Führungszapfen 17 achsparallel zur Drehachse 15 angeordnet sind, auf die das jeweils eingebrachte Leitungsrohr 2 aufgeschoben wird. An der Stellscheibe 16 sind weiterhin radial gerichtete, hydraulische Spannzylinder 18 befestigt, mit denen das über die Führungszapfen 17 aufgeschobene Leitungsrohr 2 auf der Stellscheibe 16 festgehalten wird, damit das Leitungsrohr 2 mit dem Drehantrieb 14 um die Drehachse 15 gedreht werden kann. Die zum Kanalschacht führenden Versorgungsleitungen des Richtwagens 11 sind mit 19 bezeichnet.

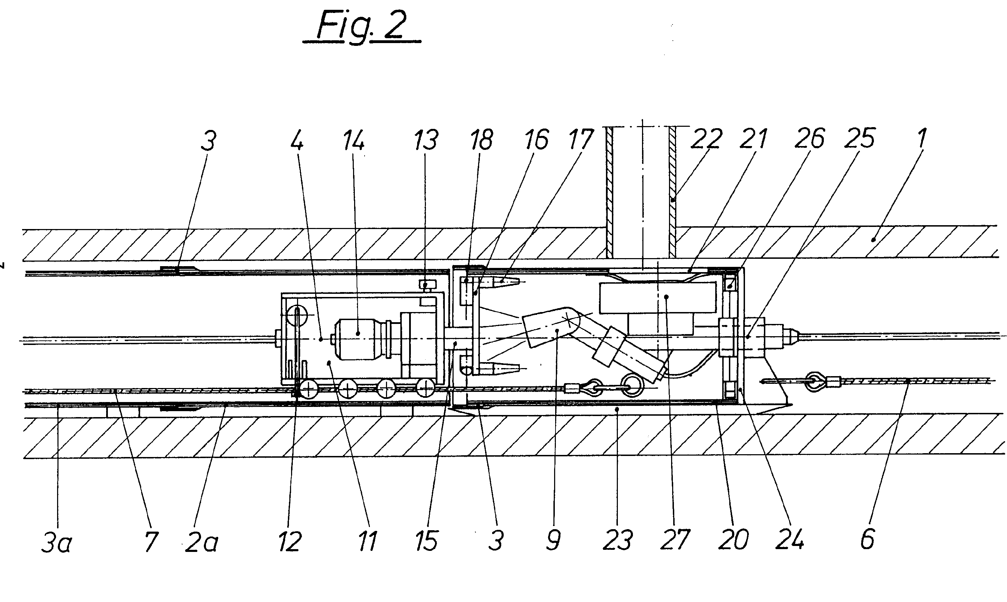

Zum Einbringen eines Leitungsrohres 20 mit einer Anschlußöffnung 21 für eine seitlich in die Kanalrohrleitung 1 einmündende Zulaufleitung 22 wird - wie in Fig. 2 dargestellt - ein Transportschlitten 23 eingesetzt, an dessen Rückwand 24 eine Drehachse 25 gelagert ist. Daran ist eine hydraulisch feststellbare Rohrhalterung 26 sowie eine Anschlußvorrichtung 27 befestigt, mit der das Leitungsrohr 20 mit der Zulaufleitung 22 verbunden und die Anschlußöffnung 21 abgedichtet wird. Zur Überwachung der Arbeitsvorgänge ist wiederum eine Fernsehkamera 9 vorgesehen.

## Patentansprüche

1. Verfahren zum Zusammensetzen von Leitungsrohren (2, 2a, 3a, 20) zu einem Inliner in einer zwischen zwei Kanalschächten verlegten, nicht begehbaren Kanalrohrleitung (1), die ggf. mit seitlich einmündenden Zulaufleitungen (22) versehen ist, wobei die einzelnen Leitungsrohre (2, 2a, 3a, 20) nacheinander mit Hilfe eines in der Kanalrohrleitung (1) verfahrbaren Transportschlittens (5) eingebracht und zu einem Rohrstrang (2a, 3a) zusammengefügt werden und wobei der Transportschlitten (5) von beidseitig daran befestigten und durch die Kanalrohrleitung (1) hindurch zu den Kanalschächten an den beiden Enden der Kanalrohrleitung (1) geführten Zugseilen (6, 7) gezogen wird, dadurch gekennzeichnet, daß das jeweils einzubauende Leitungsrohr (2, 20) über einen in die offene Kanalrohrleitung (1) hineinragenden, koaxial zur Rohrachse (4) ausgerichteten Ausleger (15 bis 18) eines im bereits zusammengesetzten Rohrstrang (2a, 3a) verfahrbaren Richtwagens (11) in die vorgegebene Einbaulage geführt wird.

2. Vorrichtung zum Zusammensetzen von Leitungsrohren (2, 2a, 3a, 20) zu einem Inliner in einer zwischen zwei Kanalschächten verlegten, nicht begehbaren Kanalrohrleitung (1) mit einem Richtwagen (11), dessen Ausleger (15 bis 18) durch eine Drehachse (15) mit einem Drehantrieb (14) des Richtwagens (11) verbunden ist der zum Verfahren mit einem Seilzug (6, 7) versehen ist, dadurch gekennzeichnet, daß der Richtwagen (11) im bereits zusammengesetzten Rohrstrang (2a, 3a) verfahrbar und zum Feststellen mit radial gerichteten Spannzylindern (13) versehen ist und daß der Ausleger (15 bis 18) eine in der Rohrachse (4) ausgerichtete Drehachse (15) sowie eine daran befestigte Stellscheibe (16) aufweist, deren konisch ausgebildete Führungszapfen (17) achsparallel zur Drehachse (15) angeordnet sind.

3

3. Vorrichtung nach Anspruch 2, dadurch gekennzeichnet, daß an der Stellscheibe (16) radial gerichtete Spannzylinder (18) befestigt sind.

4. Vorrichtung nach den Ansprüchen 2 und 3, dadurch gekennzeichnet, daß das Zugseil (7) durch den Richtwagen (11) hindurchgeführt und mit einer lösbaren Seilklemme (12) daran feststellbar ist.

5. Vorrichtung nach einem der Ansprüche 2 bis 4, dadurch gekennzeichnet, daß das einzubauende Leitungsrohr (2, 20) an einer vertikalen Rückwand (8 bzw. 24) des Transportschlittens (5 bzw. 23) abgestützt ist.

6. Vorrichtung nach Anspruch 5, dadurch gekennzeichnet, daß eine feststellbare Rohrhalterung (26) sowie eine Anschlußvorrichtung (27) zur Verbindung einer Anschlußöffnung (21) des einzubauenden Leitungsrohres (20) mit einer seitlichen Zulaufleitung (22) in der Rückwand (24) des Transportschlittens (23) drehbar gelagert sind.

## Claims

1. A method of fitting together pipes (2, 2a, 3a, 20) to form a re-liner in an inaccessible main (1) laid between two manholes, optionally with lateral pipes (22) opening into it, the individual pipes (2, 2a, 3a, 20) being successively inserted by means of a conveying slide (5) movable in the main (1), the pipes being fitted together into a string (2a, 3a) and the conveying slide (5) being pulled through the main (1) to the manholes at the two ends of the main (1) by tension cables (6, 7) secured to the two ends of the slide (5), characterised in that each pipe (2, 20) to be installed is guided into the preset position for installation by a jib (15 to 18) projecting into the open main (1) and aligned coaxially with the pipe axis (4), the jib belonging to a laying carriage (11) movable inside the already-assembled pipe string (2a, 3a).

2. A device for fitting together pipes (2, 2a, 3a, 20) to form a re-liner in an inaccessible main (1) laid between two manholes, the device comprising a laying carriage (11) whose jib (15 to 18) is connected by a rotary shaft (15) to a rotary drive (14) of the laying carriage (11), the carriage (11) being driven by a cable line (6, 7), characterised in that the laying carriage (11) is movable in the already-assembled pipe string (2a, 3a) and is secured in position by radially-aligned clamping cylinders (13), and the jib (15 to 18) comprises a rotary shaft (15) aligned along the pipe axis (4) and an adjusting disc (16) connected to the rotary shaft and having conical guide pins (17) disposed parallel to the axis of the rotary shaft (15).

3. A device according to claim 2, characterised in that radially-extending clamping cylinders (18) are secured to the adjusting disc (16).

4. A device according to claims 2 and 3, characterised in that the tension cable (7) is guided through the laying carrige (11) and secured thereto by a releasable clamp (12).

5. A device according to any of claims 2 to 4, characterised in that the pipe (2, 20) for installing is braced against a vertical rear wall (8 ; 24) of the conveying carriage (5 ; 23).

6. A device according to claim 5, characterised in that a lockable pipe holder (26) and a device (27) for connecting an opening (21) in the pipe (20) to a lateral pipe (22) are rotatably mounted in the rear wall (24) of the conveying carriage (23).

## Revendications

1. Dispositif pour assembler des éléments tubulaires de conduite (2, 2a, 3a, 20) en une canalisation intérieure montée dans une conduite d'égout tubulaire (1) qui est posée entre deux puits d'égout, où l'on ne peut pas circuler, et qui est munie, le cas échéant, de conduites d'amenée (22) débouchant latéralement, les divers éléments tubulaires de conduite (2, 2a, 3a, 20) étant mis en place l'un après l'autre à l'aide d'un traîneau (5) qui peut être déplacé dans la conduite tubulaire d'égout (1), et étant assemblés en un tuyau (2a, 3a), cependant que le traîneau (5) est tiré par des câbles tracteurs (6, 7) qui lui sont fixés des deux côtés et qui sont guidés à travers la conduite d'égout tubulaire (1) vers les puits d'égout situés aux deux extrémités de la conduite d'égout tubulaire (1), caractérisé par le fait que l'élément tubulaire de conduite (2, 20) qu'il s'agit de monter à chaque fois est amené dans sa position de montage prédéterminée par l'intermédiaire d'une console en saillie (15 à 18) qui appartient à un chariot de centrage (11) pouvant être déplacé dans le tuyau déjà assemblé (2a, 3a), qui fait saillie dans la conduite d'égout tubulaire ouverte (1) et qui est dirigée de manière coaxiale par rapport à l'axe ( 4 ) du tube.

2. Dispositif pour assembler des éléments tubulaires de conduite (2, 2a, 3a, 20) en une canalisation intérieure montée dans une conduite d'égout tubulaire (1) qui est posée entre deux puits d'égout et où l'on ne peut pas circuler, lequel comprend un chariot de centrage (11) dont la console en saillie (15 à 18) est reliée par un axe de rotation (15) à un entraînement en rotation (14) du chariot de centrage (11), celui-ci étant muni d'un dispositif de traction à câbles (6, 7) en vue de son déplacement, caractérisé par le fait que le chariot de centrage (11) peut être déplacé dans le tuyau déjà assemblé (2a, 3a), et qu'il est muni de vérins de serrage (13) dirigés radialement en vue de son blocage, et par le fait que la console en saillie (15 à 18) comporte un axe de rotation (15) qui est aligné sur l'axe (4) du tube, ainsi qu'un disque de calage (16) qui y est fixé et dont les doigts de guidage (17) sont réalisés de manière conique, leurs axes étant disposés parallèlement à l'axe de rotation (15).

3. Dispositif selon la revendication 2, caractérisé par le fait que des vérins de serrage dirigés radialement (18) sont fixés sur le disque de calage (16).

4. Dispositif selon les revendications 2 et 3, caractérisé par le fait que le câble de traction (7) passe à travers le chariot de centrage (11), et qu'il peut être bloqué sur celui-ci par une pince à câble (12) qui peut être desserrée.

5. Dispositif selon l'une des revendications 2 à 4, caractérisé par le fait que l'élément tubulaire de conduite (2, 20) qu'il s'agit de monter est appuyé contre une paroi verticale arrière (8, respectivement 24) du traîneau (5, respectivement 23).

6. Dispositif selon la revendication 5, caractérisé par le fait qu'un dispositif de maintien du tube (26) qui peut être bloqué, ainsi qu'un dispositif de raccordement (27) destiné à relier une ouverture de raccordement (21) de l'élément tubulaire de conduite (20) qu'il s'agit de monter à une conduite d'amenée latérale (22), sont montés tournants dans la paroi arrière (24) du traîneau (23).

Fig 1

_Fig. 2_